# EUROPEAN PATENT SPECIFICATION

(11) **EP 2 656 311 B1**
(45) Date of publication and mention of the grant of the patent: **22.10.2014**
(21) Application number: 11801736.7
(22) Date of filing: 20.12.2011
(51) Int. Cl.: G06T 7/20

(54) **METHOD FOR PRODUCING A PANORAMIC IMAGE AND IMPLEMENTATION APPARATUS.**
VERFAHREN ZUR ERZEUGUNG EINES PANORAMABILDES UND IMPLEMENTIERUNGSVORRICHTUNG
PROCÉDÉ POUR PRODUIRE UNE IMAGE PANORAMIQUE ET APPAREIL DE MISE EN UVRE

(30) Priority: 20.12.2010 FR 1060836
(43) Date of publication of application: 30.10.2013
(73) Proprietor: ST-Ericsson SA, 1228 Plan-les-Ouates (CH)
(72) Inventor: AUBERGER, Stéphane, F-93160 Noisy Le Grand (FR); HANUS, Nicolas, F-73160 Vimines (FR)
(74) Representative: Zapalowicz, Francis
(86) International application number: PCT/EP2011/073322
(87) International publication number: WO 2012/084884

(56) References cited:
- YONGMIN LI ET AL.: "Robust Panorama from MPEG Video", MULTIMEDIA AND EXPO, ICME 2003. PROCEEDINGS, vol. 1, 9 July 2003 (2003-07-09), pages 81-84, XP007918751,
- QUANG VINH TRUONG ET AL: "Classification-based motion vector processing for motion compensated frame interpolation using block boundary distortion metric", COMPUTER AND AUTOMATION ENGINEERING (ICCAE), 2010 THE 2ND INTERNATIONAL CONFERENCE ON, IEEE, PISCATAWAY, NJ, USA, 26 February 2010 (2010-02-26), pages 488-491, XP031660738,
- JIEFU ZHAI ET AL: "A Low Complexity Motion Compensated Frame Interpolation Method", IEEE INTERNATIONAL SYMPOSIUM ON CIRCUITS AND SYSTEMS (ISCAS), MAY 23 - 26, 2005, INTERNATIONAL CONFERENCE CENTER, KOBE, JAPAN, 23 May 2005 (2005-05-23), pages 4927-4930, XP010816702,
- EWERTH R ET AL: "Estimation of arbitrary camera motion in MPEG videos", PATTERN RECOGNITION, 2004. ICPR 2004. PROCEEDINGS OF THE 17TH INTERNAT IONAL CONFERENCE ON, CAMBRIDGE, UK, AUG. 23-26, 2004, vol. 1, 23 August 2004 (2004-08-23), pages 512-515, XP010724314,
- DANTE A ET AL: "Precise real-time outlier removal from motion vector fields for 3D .reconstruction", PROCEEDINGS 2003 INTERNATIONAL CONFERENCE ON IMAGE PROCESSING, BARCELONA, SPAIN, 14-17 SEPT. 2003, vol. 1, 14 September 2003 (2003-09-14), pages 393-396, XP010669761,

## Description

The invention relates to the production of a panoramic image on the basis of successive images extracted from a video sequence, and more particularly to the alignment of these images.

A panoramic image is an image possessing an exceptionally wide field. These panoramic images may be created with a panoramic camera comprising objectives with exceptionally wide field, or else on the basis of capturing a succession of images with a picture-taking apparatus by swivelling the latter in relation to a horizontal axis. They can thus be produced on the basis of a digital camera and of software making it possible to assemble several pictures, or else on the basis of a video sequence recorded with a video camera, or else a digital camera in video mode, and on the basis of which use is made of the images of the video sequence which are assembled.

In the case of a digital camera in a photographic capture mode, several successive pictures are taken with a camera fixed on an axis and which turns between each picture, causing two consecutive pictures to overlap. Software thereafter makes it possible to assemble the various images obtained. The field of view is widened artificially in this way.

In the case of producing a panoramic image on the basis of a video sequence, a video sequence is firstly recorded by panning, that is to say by performing a swivel motion about a fixed axis. The images of the video sequence are, for example, recorded at a frequency of 25 images per second. The images thus captured during the video sequence will serve to construct a panoramic photographic image.

To construct a panoramic image on the basis of a video sequence, it is firstly necessary to estimate the displacement existing between two successive images. This estimation of displacement makes it possible to determine a displacement vector of an image with respect to a previous image. This displacement vector then makes it possible to correctly align the two successive images within the panoramic image. Estimation of displacement is well known and is based on a method of agreement between the blocks which work on the basis of the luminance of the various input images.

However, if a disturbance appears between two consecutive images, such as for example an abrupt change of brightness due to a modification of the capture parameters or the appearance of a disturbing motion in the scene, the displacement estimation agreement method may be flawed. In this case, an erroneous displacement vector will be returned by displacement estimation means and the final displacement vector will be erroneous. There will, consequently, be a disagreement or indeed even a space within final panoramic images. Yongmin Li et al., "Robust panorama from MPEG video", Multimedia and Expo, ICME '03. Proceedings. 2003 International Conference on, pp. 81-84, vol.1, 6-9 July 2003 discloses determining erroneous motion vectors by using the median / mean of absolute difference (MAD) calculation. Quang Vinh Truong et al., "Classification-based motion vector processing for motion compensated frame interpolation using block boundary distortion metric", Computer and Automation Engineering (ICCAE), 2nd International Conference on. pp.488-491, 26-28 Feb. 2010, which also deals with motion vector analysis, determines erroneous motion vectors by angle variance (AV) calculation.

The invention is aimed at alleviating these drawbacks by correcting a displacement vector that may be erroneous during the alignment of two successive images of a video sequence for the production of a panoramic image.

According to one aspect, there is proposed in one mode of production, a method for aligning two successive images of a video sequence for the production of a panoramic image.

This method comprises a correction of a first displacement vector of a target image of the video sequence, the said first vector being determined by an estimation of the displacement of the target image with respect to at least one previous image of the video sequence.

Preferably, the correction comprises:
- a determination of the average of the horizontal coordinates of the displacement vectors of at least one image preceding the target image;
- a detection of the first vector as suspect vector in the case where a difference is detected between the horizontal coordinate of the first vector and the said average;
- a comparison of the horizontal coordinate of a second displacement vector of an image following the said target image with the said average;
- a correction of the suspect vector in the case where the horizontal coordinate of the second displacement vector is greater than the said average.

The correction advantageously comprises a determination of the variance of the average.

Preferably, a difference is detected between the horizontal coordinate of the first displacement vector and the said average if the subtraction between the horizontal coordinate of the first displacement vector and the said average is greater than the said variance.

The coordinate of the displacement vector is preferably similar to the said average if their difference is less than the said variance.

Advantageously, the correction of the suspect vector comprises a replacement of the first vector with the displacement vector of the image preceding the target image.

According to another aspect, there is proposed in one mode of production, an apparatus furnished with digital picture-taking means, comprising means for aligning two successive images of a video sequence for the production of a panoramic image.

The alignment means comprise means for correcting a first displacement vector of a target image of a video sequence, the said first vector being determined by means for estimating the displacement between two images of the video sequence that are able to estimate the displacement vector of an image with respect to at least one previous image.

Preferably, the alignment means comprise:
- means for determining an average that are able to determine the average of the horizontal coordinates of the displacement vector of at least one image preceding the target image;
- detection means able to detect the first vector as suspect vector in the case where a difference is detected between the horizontal coordinate of the first vector and the said average;
- comparison means able to compare the horizontal coordinate of a second displacement vector of an image following the said target image with the said average; and
- correction means able to correct the suspect vector in the case where the horizontal coordinate of the second displacement vector is similar to the said average.

The alignment means preferably comprise variance determination means able to determine the variance of the said average.

The detection means can advantageously comprise calculation means able to calculate a subtraction between the horizontal coordinate of the first displacement vector and the said average, and a first comparison module able to compare the said subtraction with the said variance.

The comparison means can also advantageously comprise a second comparison module able to compare the difference between the coordinate of the second displacement vector and the said average with the said variance.

Preferably, the correction means can comprise replacement means able to replace the first vector with the displacement vector of the image preceding the target image.

Other advantages and characteristics of the invention will become apparent on examining the wholly non-limiting detailed description of the modes of production and of implementation, and the appended drawings in which:
- Figure 1 represents in a schematic manner the checking of the displacement vectors of two successive images of a video sequence;
- Figure 2 represents a flowchart of a method for aligning two successive images of a video sequence for the production of a panoramic image according to one mode of implementation; and
- Figure 3 schematically represents an apparatus comprising digital photography means comprising means for aligning two successive images of a video sequence for the production of a panoramic image, according to one mode of production.

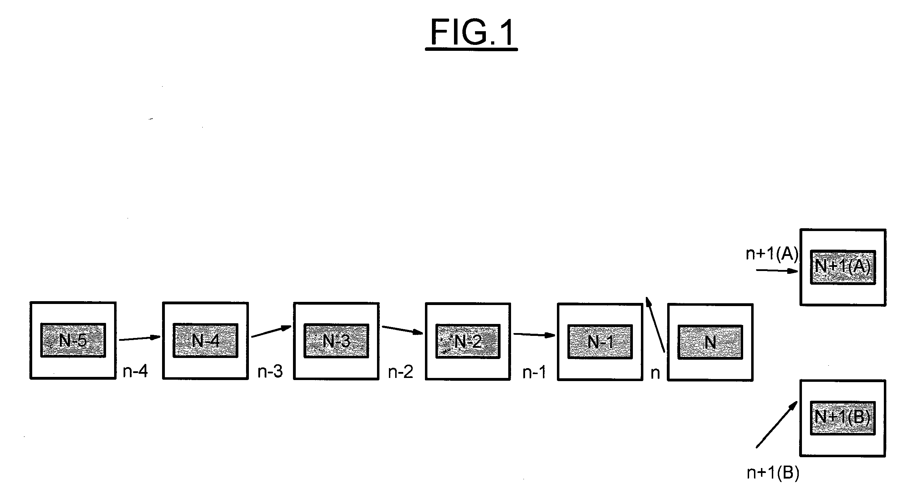

In Figure 1 is represented in a schematic manner an example of checking of the displacement vectors determined for each of successive images constituting a final panoramic image.

Firstly, successive images N-5, N-4, N-3, N-2, N-1, N, N+1(A) and N+1(B) are represented. These successive images are extracted from a video sequence to produce a panoramic image. The displacement vectors n-4, n-3, n-2, n-1, n, n+1(A) and n+1 (B) determined for each image are represented lower down.

The displacement vectors are determined by comparing an image with the previous image in the video sequence. Thus, the displacement vector n-4 of the image N-4 is determined by comparing the previous image N-5 with the image N-4.

For a target image N, we determine whether a first displacement vector n is a suspect vector, that is to say a displacement vector differing from the previous displacement vectors. In the example presented in Figure 1, the vectors n-4 to n-1 are directed from left to right with a small inclination differing little between the vectors, while the vector n is directed from right to left with a large inclination. The vector n is thus considered in this example as differing from the previous vectors.

It is determined that a vector n is suspect by calculating firstly an average of the displacement vectors of the previous images, and more particularly by calculating the average of the horizontal coordinates of the previous displacement vectors.

The horizontal coordinate of the said first vector n is then compared with the thus calculated average of the horizontal coordinates of the previous vectors. If the horizontal coordinate of the first vector n is different from the calculated average, the said first vector n is then classed as suspect vector. The suspect vector is not corrected directly since this difference of horizontal coordinate may be due to numerous reasons.

The horizontal coordinate of the displacement vector n+1 of the following image N+1 is then checked so as to know whether or not the first vector n, then classed suspect, of the target image N needs to be corrected.

Accordingly, the displacement vector n+1 of the following image N+1 is determined, and it is compared with the previously calculated average.

If the displacement vector n+1 of the following image N+1 corresponds to the calculated average of the displacement vectors of the images preceding the target image N as in the case of the vector n+1(A) determined for the following image N+1(A), the first displacement vector classed as suspect is indeed erroneous and needs to be corrected.

In the converse case, that is to say if the horizontal coordinate of the displacement vector n+1 of the following image N+1 remains different from the said average calculated as in the case of the vector n+1(B) determined for the following image N+1(B), the suspicion of error of estimation of the first vector n is not confirmed. Henceforth, the displacement vector n, classed as suspect, of the target image N is not corrected.

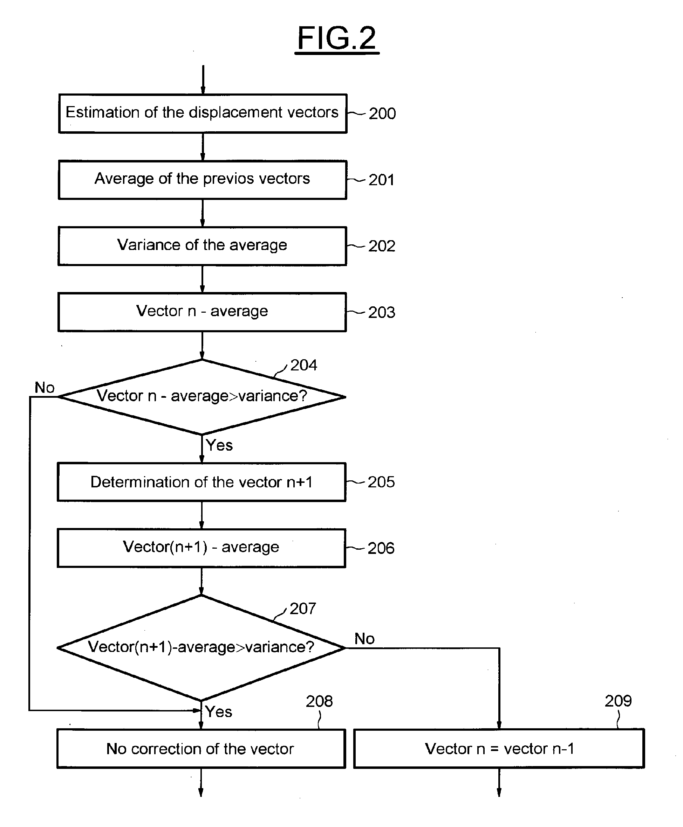

In Figure 2 is schematically represented a flowchart of a mode of implementation of a method for aligning two successive images of a video sequence for the production of a panoramic image, comprising a correction of a first displacement vector of a target image of the video sequence.

The displacement vectors are determined initially, in an initial step 200, with the aid of a method for estimating the displacement between two successive images of a video sequence. Each vector is determined for an image on the basis of at least one previous image.

In a first step 201 of the method, an average of the horizontal coordinates of the displacement vectors of at least one image preceding the target is determined. In a following step 202, the variance of the said average calculated in the previous step is determined.

The difference between the horizontal coordinate of the first vector of the target image n, denoted vector n, and the said average calculated in the first step 201, is thereafter calculated in a step 203.

The result of the difference between the horizontal coordinate of the first vector of the target image n and the said average is compared, in a following step 204, with the variance calculated in step 202. If the difference calculated in step 203 is less than the variance calculated in step 201, we pass directly to step 208 in which the said first vector is not corrected. On the other hand, if the difference calculated in step 203 is greater than the variance calculated in step 202, then the displacement vector of the following image, denoted vector n+1, is determined in a following step 205. In a following step 206, the horizontal coordinate of the vector n+1 of the following image is subtracted from the average calculated in step 201. In a following step 207, the result of the subtraction thus calculated in the previous step 206 is compared with the variance calculated in step 202.

If the result of the subtraction is greater than the variance, this signifies that the vector of the following image n+1 is also different from the average calculated for the previous vectors, and in this case it is not possible to be certain that the first vector of the target image n considered to be suspect is really erroneous. Indeed, this can correspond to a displacement of the camera or to an instability of the sequence. In this case we pass to the following step 208 in which the vector of the target image n is not corrected.

On the other hand, if the result of the subtraction between the horizontal coordinate of the displacement vector of the following image n+1 and the average is less than the variance, then the said first vector of the target image n is replaced, in a step 209, with the displacement vector of the image n-1 preceding the target image. The disturbance encountered for the determination of the displacement vector of the target image is thus corrected so as to obtain an undisturbed panoramic image.

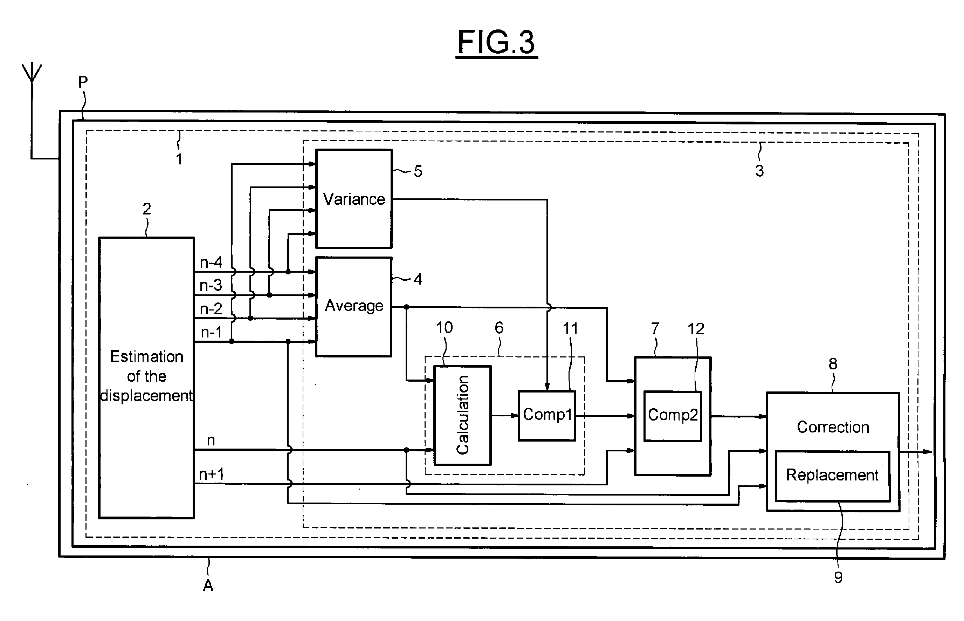

In Figure 3 is represented in a schematic manner an apparatus A, such as a mobile telephone apparatus, comprising means P for capturing digital photographic images able to record a video sequence comprising means 1 of alignment of two successive images of a video sequence for the production of a panoramic image.

The alignment means 1 comprise means 2 for estimating the displacement between two successive images of the video sequence, which are able to estimate the displacement vector of an image with respect to at least one previous image, and means 3 for correcting a first displacement vector n of a target image N of a video sequence.

The correction means 3 comprise means 4 for determining an average, which are able to determine the average of the horizontal coordinates of the displacement vectors of at least one image preceding the target image N (the displacement vectors of the previous images are denoted n-1, n-2, n-3, n-4, etc.). The correction means 3 also comprise variance determination means 5, able to determine the variance of the said average. The correction means 3 also comprise detection means 6 able to detect the first vector of the target image N as a suspect vector in the case where a difference is detected between the horizontal coordinate of the said first vector and the said average, and comparison means 7 able to compare the horizontal coordinate of a second displacement vector n+1 of an image N+1 following the said target image N with the said average. Finally, the correction means 3 comprise correction means 8 able to correct the suspect vector in the case where the horizontal coordinate of the second displacement vector is similar to the said average.

The estimation means 2 deliver as output the displacement vectors of the images preceding the target image, that is to say of the vectors n-1, n-2, n-3 and n-4, for example, to means 4 for determining the average, as well as to the means 5 for determining the variance. The means 4 for determining the average calculate the average of the horizontal coordinates of the displacement vectors for the various images preceding the target image n provided.

The means 5 for determining the variance also calculate the variance of the said average on the basis of the same data.

The average calculated by the means 4 for determining the average is delivered to calculation means 10 included in the detection means 6. These calculation means 10 also receive as input the coordinates of the first vector n of the target image N that are delivered by the means for estimating the displacement 2. The calculation means 10 calculate a subtraction between the horizontal coordinate of the first displacement vector n of the target image N, and the said average calculated by the means 4 for determining the average. The result of this subtraction is delivered by the calculation means 10 to a first comparison module 11 also included in the detection means 6. The first comparison module 11 also receives as input the variance calculated by the means 5 for determining the variance.

The first comparison module 11 compares the result of the said subtraction determined by the calculation means 10 with the said variance. If the result of the subtraction is less than the said variance, the first vector n of the target image N is similar to the previous vectors, and does not have to be corrected. In this case, a signal is delivered as output from the first comparison module 11 to the comparison means 7 which deliver as output a signal indicating that the correction means 8 need not perform any correction of the first displacement vector n of the target image N. The correction means 8, receiving as input also the first displacement vector n of the target image N, deliver, in this case as output, the first displacement vector n uncorrected.

On the other hand, if the result of the subtraction calculated by the calculation means 10 is greater than the said variance, the first comparison module 11 delivers as output a signal indicating that the first displacement vector n of the target image N is suspect. This signal is delivered to the comparison means 7 which also receive as input the average calculated by the means 4 for determining the average, together with the coordinates of a displacement vector n+1, determined by the estimation means 2, of the image N+1 following the target image N.

The comparison means 7 comprise a second comparison module 12 able to compare the difference between the coordinate of the second displacement vector n+1 and the said average, with the said variance. If the difference between the horizontal coordinate of the second vector n+1 and the average is less than the variance, the determination means 7 deliver as output a signal confirming that the first displacement vector n of the target image N is erroneous. The correction means 8 receive this signal as input, thus signifying that the first displacement vector n of the target image N needs to be corrected.

The correction means 8 comprise replacement means 9 able to replace the first displacement vector n of the target image N with the displacement vector n-1 of the image preceding the target image, i.e. the image N-1. Accordingly, the correction means 8 also receive as input the coordinates, determined by the estimation means 2, of the previous vector n-1. The correction means 8 deliver as output at this moment the new, corrected, coordinates of the first vector n corresponding to the coordinates of the displacement vector n-1 of the image N-1 preceding the target image N.

On the other hand, if the difference between the horizontal coordinate of the second displacement vector n+1 and the said average is greater than the said variance, a signal is delivered as output from the comparison means 7 to the correction means 8, indicating that the first displacement vector of the target image n need not be corrected. The correction means 8 then deliver as output the coordinates, uncorrected, of the first displacement vector of the target image n.

It is therefore proposed, according to the present description, to correct a displacement vector that may be erroneous during the alignment of two successive images of a video sequence for the production of a panoramic image, by replacing the displacement vector of the target image with the displacement vector of the image preceding the target image if the displacement vector of the image following the target image possesses a displacement vector comparable with the average of the displacement vectors of at least one image preceding the target image in contradistinction to the displacement vector of the target image which is different.

In this way it is possible to alleviate displacement vector estimation errors due, for example, to abrupt changes of brightness.

## Claims

1. Method for aligning two successive images of a video sequence for the production of a panoramic image, comprising a correction of a first displacement vector of a target image of the video sequence, the said first vector being determined by an estimation of the displacement of the target image with respect to at least one previous image of the video sequence, **characterized in that** the correction comprises:
- a determination (201) of the average of the horizontal coordinates of the displacement vectors of at least one image preceding the target image;
- a detection (204) of the first vector as suspect vector in the case where a difference is detected between the horizontal coordinate of the first vector and the said average;
- a comparison (207) of the horizontal coordinate of a second displacement vector of an image following the said target image with the said average;
- a correction (209) of the suspect vector in the case where the horizontal coordinate of the second displacement vector is similar to the said average.

2. Method according to Claim 1, **characterized in that** the correction comprises a determination (202) of the variance of the average.

3. Method according to Claim 2, **characterized in that** a difference is detected between the horizontal coordinate of the first displacement vector and the said average if the subtraction between the horizontal coordinate of the first displacement vector and the said average is greater than the said variance.

4. Method according to one of Claims 2 and 3, **characterized in that** the coordinate of the second displacement vector is similar to the said average if their difference is less than the said variance.

5. Method according to one of Claims 1 to 4, **characterized in that** the correction (206) of the suspect vector comprises a replacement of the first vector with the displacement vector of the image preceding the target image.

6. Apparatus furnished with digital picture-taking means, comprising means for aligning two successive images of a video sequence for the production of a panoramic image, **characterized in that** the alignment means comprise means for correcting a first displacement vector of a target image of a video sequence, the said first vector being determined by means for estimating the displacement between two images of the video sequence that are able to estimate the displacement vector of an image with respect to at least one previous image, **characterized in that** the correction means comprise:
- means for determining an average that are able to determine the average of the horizontal coordinates of the displacement vectors of at least one image preceding the target image;
- detection means able to detect the first vector as suspect vector in the case where a difference is detected between the horizontal coordinate of the first vector and the said average;
- comparison means able to compare the horizontal coordinate of a second displacement vector of an image following the said target image with the said average; and
- a correction module able to correct the suspect vector in the case where the horizontal coordinate of the second displacement vector is similar to the said average.

7. Apparatus according to Claim 6, **characterized in that** the correction means comprise variance determination means able to determine the variance of the said average.

8. Apparatus according to Claim 7, **characterized in that** the detection means comprise calculation means able to calculate a subtraction between the horizontal coordinate of the first displacement vector and the said average, and a first comparison module able to compare the said subtraction with the said variance.

9. Apparatus according to one of Claims 7 and 8, **characterized in that** the comparison means comprise a second comparison module able to compare the difference between the horizontal coordinate of the second displacement vector and the said average with the said variance.

10. Apparatus according to one of Claims 6 to 9, **characterized in that** the correction means comprise replacement means able to replace the first vector with the displacement vector of the image preceding the target image.

## Patentansprüche

1. Verfahren zur Ausrichtung zweier aufeinanderfolgender Bilder einer Videosequenz zur Erzeugung eines Panoramabilds, das eine Korrektur eines ersten Verschiebungsvektors eines Zielbilds der Videosequenz umfasst, wobei der erste Vektor durch eine Abschätzung der Verschiebung des Zielbilds mit Bezug auf mindestens ein vorhergehendes Bild der Videosequenz bestimmt wird, **dadurch gekennzeichnet, dass** die Korrektur Folgendes umfasst:
- eine Bestimmung (201) des Durchschnitts der horizontalen Koordinaten der Verschiebungsvektoren mindestens eines dem Zielbild vorangehenden Bilds;
- eine Detektion (204) des ersten Vektors als vermuteter Vektor in dem Fall, wo eine Differenz zwischen der horizontalen Koordinate des ersten Vektors und dem Durchschnitt detektiert wird;
- einen Vergleich (207) der horizontalen Koordinate eines zweiten Verschiebungsvektors eines dem Zielbild folgenden Bilds mit dem Durchschnitt;
- eine Korrektur (209) des vermuteten Vektors in dem Fall, wo die horizontale Koordinate des zweiten Verschiebungsvektors ähnlich dem Durchschnitt ist.

2. Verfahren nach Anspruch 1, **dadurch gekennzeichnet, dass** die Korrektur eine Bestimmung (202) der Varianz des Durchschnitts umfasst.

3. Verfahren nach Anspruch 2, **dadurch gekennzeichnet, dass** eine Differenz zwischen der horizontalen Koordinate des ersten Verschiebungsvektors und dem Durchschnitt detektiert wird, falls die Subtraktion zwischen der horizontalen Koordinate des ersten Verschiebungsvektors und dem Durchschnitt größer als die Varianz ist.

4. Verfahren nach einem der Ansprüche 2 und 3, **dadurch gekennzeichnet, dass** die Koordinate des zweiten Verschiebungsvektors ähnlich dem Durchschnitt ist, falls ihre Differenz weniger als die Varianz ist.

5. Verfahren nach einem der Ansprüche 1 bis 4, **dadurch gekennzeichnet, dass** die Korrektur (206) des vermuteten Vektors ein Ersetzen des ersten Vektors mit dem Verschiebungsvektor des dem Zielbild vorangehenden Bilds umfasst.

6. Vorrichtung, die mit digitalen Bildaufnahmemitteln ausgerüstet ist und Mittel zur Ausrichtung zweier aufeinanderfolgender Bilder einer Videosequenz für die Erzeugung eines Panoramabilds umfasst, **dadurch gekennzeichnet, dass** die Ausrichtungsmittel Mittel zur Korrektur eines ersten Verschiebungsvektors eines Zielbilds einer Videosequenz umfassen, wobei der erste Vektor durch Mittel zur Schätzung der Verschiebung zwischen zwei Bildern der Videosequenz bestimmt wird, die den Verschiebungsvektor eines Bilds mit Bezug auf mindestens ein vorhergehendes Bild schätzen können, **dadurch gekennzeichnet, dass** die Korrekturmittel Folgendes umfassen:
- Mittel zur Bestimmung eines Durchschnitts, die den Durchschnitt der horizontalen Koordinaten der Verschiebungsvektoren mindestens eines dem Zielbild vorangehenden Bilds bestimmen können;
- Detektionsmittel, die den ersten Vektor als vermuteten Vektor in dem Fall, wo eine Differenz zwischen der horizontalen Koordinate des ersten Vektors und dem Durchschnitt detektiert wird, detektieren können;
- Vergleichsmittel, die die horizontale Koordinate eines zweiten Verschiebungsvektors eines dem Zielbild folgenden Bilds mit dem Durchschnitt vergleichen können, und
- ein Korrekturmodul, das den vermuteten Vektor in dem Fall, wo die horizontale Koordinate des zweiten Verschiebungsvektors ähnlich dem Durchschnitt ist, korrigieren kann.

7. Vorrichtung nach Anspruch 6, **dadurch gekennzeichnet, dass** die Korrekturmittel Varianzbestimmungsmittel umfassen, die die Varianz des Durchschnitts bestimmen können.

8. Vorrichtung nach Anspruch 7, **dadurch gekennzeichnet, dass** die Detektionsmittel Berechnungsmittel, die eine Subtraktion zwischen der horizontalen Koordinate des ersten Verschiebungsvektors und dem Durchschnitt berechnen können, und ein erstes Vergleichsmodul, das die Subtraktion mit der Varianz vergleichen kann, umfassen.

9. Vorrichtung nach einem der Ansprüche 7 und 8, **dadurch gekennzeichnet, dass** die Vergleichsmittel ein zweites Vergleichsmodul umfassen, das die Differenz zwischen der horizontalen Koordinate des zweiten Verschiebungsvektors und dem Durchschnitt mit der Varianz vergleichen kann.

10. Vorrichtung nach einem der Ansprüche 6 bis 9, **dadurch gekennzeichnet, dass** die Korrekturmittel Ersatzmittel umfassen, die den ersten Vektor mit dem Verschiebungsvektor des dem Zielbild vorangehenden Bilds ersetzen können.

## Revendications

1. Procédé pour aligner deux images successives d'une séquence vidéo pour la production d'une image panoramique, comprenant une correction d'un premier vecteur de déplacement d'une image cible de la séquence vidéo, ledit premier vecteur étant déterminé par une estimation du déplacement de l'image cible par rapport à au moins une image précédente de la séquence vidéo, **caractérisé en ce que** la correction comprend :
une détermination (201) de la moyenne des coordonnées horizontales des vecteurs de déplacement d'au moins une image précédant l'image cible ;
une détection (204) du premier vecteur comme vecteur suspect dans le cas où une différence est détectée entre la coordonnée horizontale du premier vecteur et ladite moyenne ;
une comparaison (207) de la coordonnée horizontale d'un second vecteur de déplacement d'une image suivant ladite image cible à ladite moyenne ;
une correction (209) du vecteur suspect dans le cas où la coordonnée horizontale du second vecteur de déplacement est similaire à ladite moyenne.

2. Procédé selon la revendication 1, **caractérisé en ce que** la correction comprend une détermination (202) de la variance de la moyenne.

3. Procédé selon la revendication 2, **caractérisé en ce qu'**une différence est détectée entre la coordonnée horizontale du premier vecteur de déplacement et ladite moyenne si la soustraction entre la coordonnée horizontale du premier vecteur de déplacement et ladite moyenne est supérieure à ladite variance.

4. Procédé selon l'une des revendications 2 et 3, **caractérisé en ce que** la coordonnée du second vecteur de déplacement est similaire à ladite moyenne si leur différence est inférieure à ladite variance.

5. Procédé selon l'une des revendications 1 à 4, **caractérisé en ce que** la correction (206) du vecteur suspect comprend un remplacement du premier vecteur par le vecteur de déplacement de l'image précédant l'image cible.

6. Appareil équipé d'un moyen de prise d'image numérique, comprenant un moyen pour aligner deux images successives d'une séquence vidéo pour la production d'une image panoramique, **caractérisé en ce que** le moyen d'alignement comprend un moyen pour corriger un premier vecteur de déplacement d'une image cible d'une séquence vidéo, ledit premier vecteur étant déterminé par un moyen pour estimer le déplacement entre deux images de la séquence vidéo qui permettent d'estimer le vecteur de déplacement d'une image par rapport à au moins une image précédente, **caractérisé en ce que** le moyen de correction comprend :
un moyen pour déterminer une moyenne permettant de déterminer la moyenne des coordonnées horizontales des vecteurs de déplacement d'au moins une image précédant l'image cible ;
un moyen de détection permettant de détecter le premier vecteur comme vecteur suspect dans le cas où une différence est détectée entre la coordonnée horizontale du premier vecteur et ladite moyenne ;
un moyen de comparaison permettant de comparer la coordonnée horizontale d'un second vecteur de déplacement d'une image suivant ladite image cible à ladite moyenne ; et
un module de correction permettant de corriger le vecteur suspect dans le cas où la coordonnée horizontale du second vecteur de déplacement est similaire à ladite moyenne.

7. Appareil selon la revendication 6, **caractérisé en ce que** le moyen de correction comprend un moyen de détermination de variance permettant de déterminer la variance de ladite moyenne.

8. Appareil selon la revendication 7, **caractérisé en ce que** le moyen de détection comprend un moyen de calcul permettant de calculer une soustraction entre la coordonnée horizontale du premier vecteur de déplacement et ladite moyenne, et un premier module de comparaison permettant de comparer ladite soustraction à ladite variance.

9. Appareil selon l'une des revendications 7 et 8, **caractérisé en ce que** le moyen de comparaison comprend un second module de comparaison permettant de comparer la différence entre la coordonnée horizontale du second vecteur de déplacement et ladite moyenne à ladite variance.

10. Appareil selon l'une des revendications 6 à 9, **caractérisé en ce que** le moyen de correction comprend un moyen de remplacement permettant de remplacer le premier vecteur par le vecteur de déplacement de l'image précédant l'image cible.
